(19) 

**Europäisches Patentamt**

**European Patent Office**

**Office européen des brevets**

(11) **EP 4 717 493 A1**

(12) **EUROPEAN PATENT APPLICATION**

(43) Date of publication:
01.04.2026  Bulletin 2026/14

(21) Application number: **25199591.6**

(22) Date of filing: **02.09.2025**

(51) International Patent Classification (IPC):
*B60K 28/06* (2006.01)      *B60W 30/18* (2012.01)
*B60W 50/08* (2020.01)

(52) Cooperative Patent Classification (CPC):
**B60K 28/06; B60W 30/16; B60W 30/18109;
B60W 50/082; B60W 50/14;** B60W 2040/0827;
B60W 2050/0088; B60W 2050/0095;
B60W 2050/146; B60W 2540/215; B60W 2540/22;
B60W 2540/229; B60W 2540/26; B60W 2720/10;
B60Y 2302/05

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.09.2024  JP 2024169862**

(71) Applicant: **TOYOTA JIDOSHA KABUSHIKI
KAISHA
Toyota-shi, Aichi-ken 471-8571 (JP)**

(72) Inventors:
• **OGIHARA, Takahiko**
  **Toyota-shi, 471-8571 (JP)**
• **OUCHI, Yusuke**
  **Toyota-shi, 471-8571 (JP)**

(74) Representative: **J A Kemp LLP
80 Turnmill Street
London EC1M 5QU (GB)**

(54) **VEHICLE DRIVING CONTROL DEVICE AND METHOD**

(57)     A vehicle driving control device comprising a deceleration control device that controls deceleration of a vehicle, and a driving support ECU configured to execute deceleration support control such that the vehicle is automatically decelerated by the deceleration control device when it is determined that it is necessary to decelerate the vehicle based on the driving conditions of the vehicle in a situation where a deceleration support control switch is on, in which the driving support ECU executes the deceleration support control when it is determined that alertness level of a driver is equal to or less than a threshold value in a situation where the deceleration support control switch is off.

FIG.1

EP 4 717 493 A1

**Description**

BACKGROUND OF THE INVENTION

1. Field of the Invention

The present invention relates to a driving control device and method for vehicles such as automobiles, and more specifically, to a driving control device and method for dealing with situations in which alertness level of a driver has decreased.

2. Description of the Related Art

As one type of driving control device for vehicles such as automobiles, there is known a driver abnormal condition response control device that automatically decelerates and stops a vehicle when a driver becomes unable to continue driving due to decreased alertness or sudden illness during vehicle driving.

For example, in Japanese Patent Application Laid-open Publication No. 2017-190047, a driving control device is described that controls a vehicle speed so that it does not fall below a lower limit speed determined according to a road configuration, while decelerating a vehicle to stop it, when it is determined that a driver is in an abnormal state where he or she has lost the ability to drive the vehicle.

According to this type of driving control device, when alertness level of a driver decreases to a point where he or she can no longer drive a vehicle, the vehicle can be automatically decelerated and stopped to prevent the vehicle from continuing to travel while the driver is in an abnormal state.

The alertness level of a driver generally decreases gradually due to fatigue caused by long hours of driving. Therefore, it is considered that deceleration support control, which automatically decelerates a vehicle as necessary when the alertness level of the driver falls below a predetermined threshold value, can be performed before the driver loses an ability to drive the vehicle.

The deceleration support control is a control that automatically decelerates an own vehicle to ensure its safety when there is an object that requires the own vehicle to decelerate, such as a stopped vehicle in front of the own vehicle. However, the deceleration support control is not executed unless a corresponding switch is turned on. Therefore, even in a vehicle equipped with the deceleration support control, when the deceleration support control switch is turned off, deceleration support control cannot be executed even if the alertness level of the driver decreases and the driver is unable to turn the switch on.

SUMMARY

The present invention provides a vehicle driving control device and method that is improved so that, even when a deceleration support control switch is off, deceleration support control can be executed without requiring a driver to operate the switch when alertness level of the driver falls equal to or less than a threshold value.

According to the present invention, a vehicle driving control device is provided that comprises: a deceleration control device that controls deceleration of a vehicle, and an electronic control unit configured to execute deceleration support control that automatically decelerates the vehicle by the deceleration control device when it is determined that it is necessary to decelerate the vehicle based on driving conditions of the vehicle in a situation where a deceleration support control switch is on.

The electronic control unit is further configured to execute the deceleration support control when it is determined that alertness level of a driver is equal to or less than a threshold value in a situation where the deceleration support control switch is off.

The present invention also provides a vehicle driving control method that comprises executing deceleration support control to automatically decelerate a vehicle when it is determined that it is necessary to decelerate the vehicle based on driving conditions of the vehicle in a situation where a deceleration support control switch is on.

The vehicle driving control method further comprises executing the deceleration support control when it is determined that alertness level of a driver is equal to or less than a threshold value in a situation where the deceleration support control switch is off.

According to the above vehicle driving control device and method, when it is determined that it is necessary to decelerate the vehicle based on driving conditions of the vehicle in the situation where the deceleration support control switch is on, the deceleration support control is executed to automatically decelerate the vehicle. Furthermore, when it is determined that the alertness level of the driver is equal to or less than the threshold value in the situation where the deceleration support control switch is off, the deceleration support control is executed.

Therefore, even while the deceleration support control switch is off, when it is determined that the alertness level of the driver is equal to or less than the threshold value, the deceleration support control can be executed without requiring the driver to operate the deceleration support control switch.

In one aspect of the vehicle driving control device of the present invention, the electronic control unit is further configured to determine necessity to reduce a vehicle speed based on driving status of the driver, and change at least one of the threshold value and the alertness level in accordance with the necessity such that the higher the necessity, the more likely it is determined that the alertness level is equal to or less than the threshold value.

In one aspect of the vehicle driving control method of the present invention, the vehicle driving control method further comprises: determining the necessity to reduce a vehicle speed based on driving status of the driver, and changing at least one of the threshold value and the alertness level in accordance with the necessity such that the higher the necessity, the more likely it is determined that the alertness level is equal to or less than the threshold value.

According to the aspect of the above-described device and method, the necessity to reduce the vehicle speed is determined based on the driving status of the driver, and at least one of the threshold value and/or the alertness level is changed in response to the necessity such that the higher the necessity, the more likely it is determined that the alertness level is equal to or less than the threshold value. Therefore, the higher the necessity to reduce the vehicle speed, the more likely it is determined that the alertness level is equal to or less than the threshold value, which enables the deceleration support control to be initiated earlier than when none of the threshold value and alertness level are not changed.

In another aspect of the present invention, the electronic control unit is further configured to increase the threshold value in accordance with the necessity such that the threshold value becomes larger as the necessity increases.

According to the above aspect, the threshold value is increased in accordance with the necessity such that the threshold value becomes larger as the necessity increases, so that it is possible to make it easier to determine that the alertness level is equal to or less than the threshold value as the necessity increases.

Furthermore, in another aspect of the present invention, the electronic control unit is further configured to reduce the alertness level in accordance with the necessity such that the alertness level decreases as the necessity increases.

According to the above aspect, the alertness level is reduced in accordance with the necessity such that the alertness level decreases as the necessity increases, so that it is possible to make it easier to determine that the alertness level is equal to or less than the threshold value as the necessity increases.

Furthermore, in another aspect of the present invention, the electronic control unit is further configured to determine whether or not it is necessary to reduce the vehicle speed in order to safely drive the vehicle with respect to a plurality of items related to driving status of the driver and determine that the necessity is higher when the number of the items indicating the necessity to reduce the vehicle speed is greater.

According to the above aspect, it is determined whether or not it is necessary to reduce the vehicle speed in order to safely drive the vehicle with respect to a plurality of the items related to the driving status of the driver. Furthermore, the more items indicating the necessity to reduce the vehicle speed, the higher the necessity is determined to be. Therefore, it is possible to determine whether or not the necessity is high or not based on the number of items indicating the necessity to reduce the vehicle speed.

Furthermore, in another aspect of the present invention, the electronic control unit is further configured to propose execution of the deceleration support control to the driver when it is determined that the alertness level is equal to or less than the threshold value, and execute the deceleration support control when the driver agrees to the proposal.

According to the above aspect, when it is determined that the alertness level is equal to or less the threshold value, the deceleration support control is proposed to the driver, and when the driver agrees to the proposal, the deceleration support control is executed. Thus, it is possible to prevent the deceleration support control from being executed without proposing it to the driver, and to prevent the deceleration support control from being executed against will of the driver.

Furthermore, in another aspect of the present invention, the electronic control unit is further configured to execute the deceleration support control when the driver does not respond to the proposal within a reference response time.

According to the above aspect, when the driver does not respond to the proposal within the reference response time, the deceleration support control is executed. Thus, even if the driver does not respond to the proposal, the deceleration support control can be executed when the reference response time has elapsed.

Furthermore, in another aspect of the present invention, the electronic control unit is further configured to reduce the threshold value when the driver objects to the proposal.

According to the above aspect, when the driver objects to the proposal, the threshold value is reduced. Therefore, when the driver objects to the proposal, the threshold value is reduced, which makes it less likely to determine that the alertness level is equal to or less than the threshold value.

Furthermore, in another aspect of the present invention, the electronic control unit is further configured to determine that the alertness level is equal to or less than the threshold value when a condition where the alertness level is equal to or less than the threshold value continues for a reference duration time or longer.

According to the above aspect, when the conditions where the alertness level is equal to or less than the threshold value continues for a reference duration time or longer, the alertness level is determined to be equal to or less than the threshold value. Therefore, compared to where the alertness level is determined to be equal to or less than the threshold value without considering the duration time of the condition when the alertness level is equal to or less than the threshold value, the risk of incorrectly determining that the alertness level is equal to or less than the threshold value can be reduced.

Other objects, other features and attendant advantages of the present invention will be readily understood from the description of the embodiments of the present invention described with reference to the following drawings.

BRIEF DESCRIPTION OF THE DRAWINGS

FIG. 1 is a schematic configuration diagram showing an embodiment of a vehicle driving control device according to the present invention.
FIG. 2 is a flowchart corresponding to the deceleration support control program in first and second embodiments.
FIG. 3 is a flowchart corresponding to a driving control program executed when alertness level of a driver decreases in the first embodiment.
FIG. 4 is a flowchart corresponding to the deceleration control program executed when the driver is in an abnormal state in the first and second embodiments.
FIG. 5 is a flowchart corresponding to the driving control program executed when the alertness level of the driver decreases in the second embodiment.
FIG. 6 is a diagram explaining operation of the first embodiment in a situation where the alertness level of the driver decreases.
FIG. 7 is a diagram explaining operation of the second embodiment in a situation where the alertness level of the driver decreases.
FIG. 8 is a diagram showing an example of a screen displayed on a display device in the driving control when the alertness level of the driver decreases.
FIG. 9 is a diagram showing an example of a temporal change in a "Yes" icon of a soft switch displayed on the display device in the driving control when the alertness level of the driver decreases.

The present invention will now be described in detail with reference to the accompanying drawings.

DETAILED DESCRIPTION

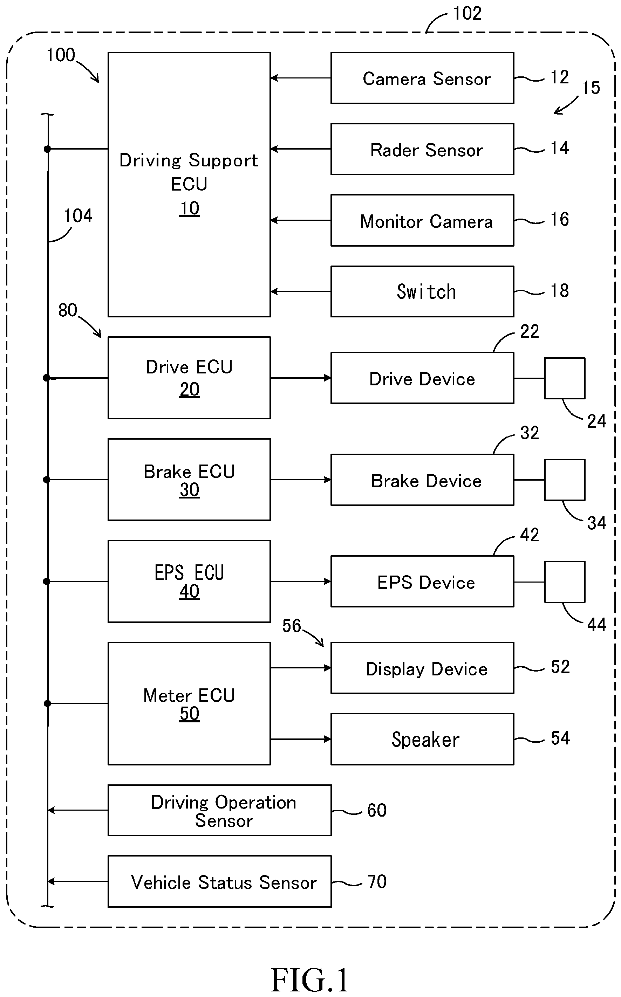

As shown in FIG. 1, a driving control device 100 according to the embodiments of the present invention is applied to a vehicle 102 and includes a driving support ECU 10. The vehicle 102 is an autonomous vehicle equipped with a drive ECU 20, a brake ECU 30, an electric power steering ECU 40, and a meter ECU 50. ECU refers to an electronic control unit primarily composed of a microcomputer. Electric power steering is referred to as EPS in the following description.

The microcomputer in each ECU includes a CPU, ROM, RAM, read/write non-volatile memory (N/M), and an interface (I/F). The CPU executes instructions (programs, routines) stored in the ROM to perform various functions. Furthermore, these ECUs are interconnected via a CAN (Controller Area Network) 104 to enable data exchange (communication) between them. Therefore, detected values from sensors (including switches) connected to a specific ECU are transmitted to other ECUs.

The driving support ECU 10 is a central control unit that performs driving control for driving support, such as driving control when alertness level of a driver decreases, deceleration support control, and deceleration control when the driver is in an abnormal state. In the embodiment, the driving support ECU 10 cooperates with other ECUs, as will be described in detail later, to execute the driving control when the alertness level of the driver decreases. The deceleration support control in the embodiment is a control that automatically decelerates the vehicle to ensure its safety when there is a stopped vehicle or a deceleration target such as a curved road in front of the own vehicle 102 that requires deceleration of the own vehicle. However, the deceleration support control may be any control known in the art that automatically decelerates the vehicle when it is determined that it is necessary to decelerate the vehicle based on driving conditions of the vehicle.

The driving support ECU 10 is connected to a camera sensor 12, a radar sensor 14, a monitor camera 16, and a switch 18. The camera sensor 12 and the radar sensor 14 each include multiple camera devices and multiple radar devices. The camera sensor 12 and radar sensor 14 function as a deceleration target detection device 15 that detects at least a deceleration target in front of the vehicle 102. The deceleration target may be a red signal, a stop sign or road marking, an intersection without a signal, a stopped vehicle, a curved road, a preceding vehicle, etc.

Each camera device of the camera sensor 12, which is not shown in FIG. 1, includes a camera unit that captures images of surroundings of the vehicle 102 and a recognition unit that analyzes the image data obtained by the camera unit to recognize targets such as white lines and other vehicles. The recognition unit supplies information about the recognized targets to the driving support ECU 10 at predetermined intervals.

Each radar device of the radar sensor 14 uses millimeter-wave radio waves to detect a distance between the own vehicle and a three-dimensional object, a relative speed between the own vehicle and the three-dimensional object, and a relative position (direction) of the three-dimensional object with respect to the own vehicle, and supplies information representing these to the driving support ECU 10 at predetermined intervals. In addition, LiDAR (Light Detection and Ranging) may be used instead of or in addition to the radar sensor 14.

The monitor camera 16 is mounted on a dashboard or steering column and includes a camera unit that captures images of a face of the driver and an image processing unit that processes the image data of the face of the driver captured by the camera unit. The image processing unit supplies information of the image data of the face of the driver to the driving support ECU 10 at predetermined intervals. Thus, the monitor camera 16 functions as a driver monitor camera.

The CPU of the driving support ECU 10 calculates alertness level Aw based on the information of the face image data of the driver, using parameters such as eyelid closure rate per minute, eye opening status, blink frequency, or eye movements. The alertness level Aw decreases as attention of the driver becomes more distracted due to sleep deprivation or other factors, making driving unsuitable. A method for calculating the alertness level is not particularly limited, and any known method in the art may be adopted. Additionally, when calculating the alertness level, at least one of the followings may be considered: steering wheel grip pressure of the driver, armrest pressure, heart rate, muscle activity information, or brainwave patterns. Furthermore, the alertness level Aw may be calculated by the image processing unit of the monitoring camera 16, and a signal indicating the alertness level may be input to the driving support ECU 10.

The switch 18 is provided in a position operable by the driver and is operable by the driver. Although not shown in FIG. 1, the switch 18 includes a driving control switch for when the alertness level of the driver decreases, a deceleration support control switch, a deceleration control switch for when the driver is in an abnormal state, and an ACC switch. ACC is adaptive cruise control, which includes two types of control: constant speed control and preceeding vehicle following control. The driving support ECU 10 executes the corresponding control when each switch of switch 18 is turned on, as will be described in detail later.

The drive ECU 20 is connected to a drive device 22 that accelerates the vehicle 102 by imparting driving force to drive wheels 24. The drive ECU 20 normally controls the drive device 22 so that the driving force generated by the drive device 22 changes in response to driving operation of the driver. When the drive ECU 20 receives a command signal from the driving support ECU 10, it controls the drive device 22 based on the command signal.

The brake ECU 30 is connected to a brake device 32 that decelerates the vehicle 102 by applying braking force to wheels 34. The brake ECU 30 normally controls the brake device 32 so that the braking force generated by the brake device 32 changes in response to the braking operation of the driver. When the brake ECU 30 receives a command signal from the driving support ECU 10, it controls the brake device 32 based on the command signal to perform automatic braking. Note that the wheels 34 include the drive wheels 24.

Therefore, the brake ECU 30 and the brake device 32 function together as an automatic braking device. Furthermore, the drive ECU 20, drive device 22, brake ECU 30, and brake device 32 function as a deceleration control device 80 that controls the deceleration of the vehicle. Note that when braking force is applied to the wheels by the driving control during a decrease in the alertness level of the driver, etc., brake lamps not shown in FIG. 1 are illuminated.

The EPS ECU 40 is connected to an EPS device 42. The EPS ECU 40 controls a steering assist torque by controlling the EPS device 42 in accordance with a steering torque Ts and a vehicle speed V detected by a steering operation sensor 60 and a vehicle status sensor 70 described below, in a manner known in the art, thereby reducing a steering load of the driver. Additionally, the EPS ECU 40 can steer steered wheels 44 as needed by controlling the EPS device 42. Thus, the EPS ECU 40 and the EPS device 42 function as an automatic steering device that automatically steers the steered wheels as needed. Note that the steered wheels 44 are part of the wheels 34 and may also be drive wheels 24.

The meter ECU 50 is connected to a touch panel display device 52 that displays status of the control executed by the driving support ECU 10 and a speaker 54. The display device 52 may be a multi-information display that shows, for example, meter readings and various information, or it may be a navigation device display. The display device 52 may be configured to display, when it receives a signal from the driving support ECU 10, the status of control such as the driving control when the alertness level of the driver decreases. Additionally, the display device 52 may display visual warnings, and the speaker 54 may emit audio warnings. Thus, the display device 52 and the speaker 54 function as an alert device 56 that notifies the driver of warnings and the like.

The driving operation sensor 60 and the vehicle status sensor 70 are also connected to the CAN 104. Information detected by the driving operation sensor 60 and the vehicle status sensor 70 (referred to as sensor information) is transmitted to the CAN 104. The sensor information transmitted to the CAN 104 is available for use as appropriate in each ECU. Note that the sensor information may be information from a sensor connected to a specific ECU and transmitted to the CAN 104 from that specific ECU.

The driving operation sensor 60 includes a driving operation amount sensor that detects an amount of operation of an accelerator pedal, a braking operation amount sensor that detects a master cylinder pressure or force applied to a brake pedal, and a brake switch that detects whether or not the brake pedal is operated. The driving operation sensor 60 also includes a steering angle sensor that detects a steering angle, a steering torque sensor that detects the steering torque Ts, and the like.

The vehicle status sensor 70 includes a vehicle speed sensor that detects the vehicle speed V of the vehicle 102, a longitudinal acceleration sensor that detects a longitudinal acceleration of the vehicle, a lateral acceleration sensor that detects a lateral acceleration of the vehicle, and a yaw rate sensor that detects a yaw rate of the vehicle.

As will be described in detail later, the driving support ECU 10 calculates the alertness level Aw of the driver and executes the deceleration support control when the alertness level Aw is determined to be equal to or less than a threshold value Awb in a situation where the deceleration support control switch is off and the deceleration support control is not being executed,.

Furthermore, the driving support ECU 10 determines the necessity to reduce the vehicle speed based on driving status of the driver, and changes at least one of the threshold value and the alertness level Aw such that the alertness level is more likely to be determined to be equal to or less than the threshold value Awb as the necessity increases. In particular, the driving support ECU 10 increases the threshold value Awb in the first embodiment described below, and decreases the alertness level Aw in the second embodiment described below.

Furthermore, in the first and second embodiments, the driving support ECU 10, in the driving control when the alertness level of the driver decreases, proposes the execution of the deceleration support control to the driver using the display device 52 and/or the speaker 54 when it is determined that the alertness level Aw of the driver has become equal to or less than the threshold value Awb. The driving support ECU 10 executes the deceleration support control when the driver agrees to the proposal or does not respond to the proposal within a reference response time.

[First embodiment]

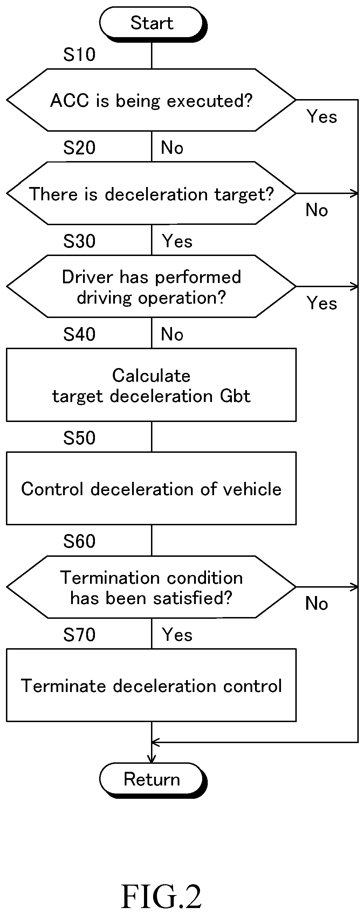

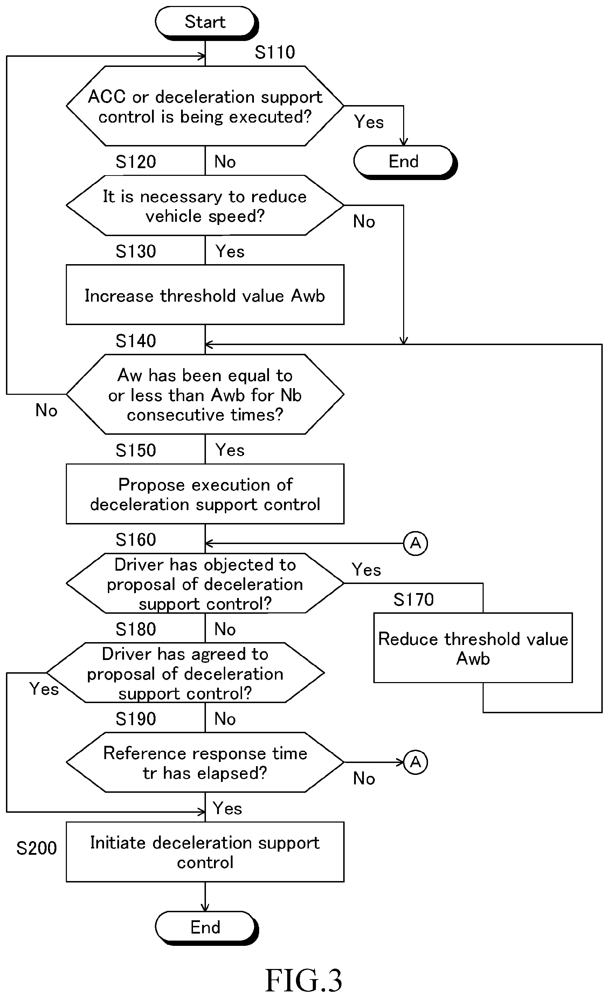

In the first embodiment, the ROM of the driving support ECU 10 stores a deceleration support control program, a driving control program for when the alertness level of the driver decreases, and a deceleration control program for when the driver is in an abnormal state corresponding to the flowcharts shown in FIGS. 2 to 4, respectively. The driving control method according to the first embodiment is executed by executing the driving control when the alertness level of the driver decreases in accordance with the flowchart shown in FIG. 3.

<Deceleration support control (FIG. 2)>

Next, the deceleration support control in the first embodiment will be described with reference to the flowchart shown in FIG. 2. The deceleration support control according to the flowchart shown in FIG. 2 is repeatedly executed at predetermined intervals by the CPU of the driving support ECU 10 while the deceleration support switch of the switch 18 is on. In other words, the deceleration support control shown in the flowchart in FIG. 2 is not executed while the deceleration support switch of the switch 18 is off. The deceleration support control described below is an example and may be performed by any method known in the art.

First, in step S10, the CPU determines whether or not ACC is being executed. When an affirmative determination is made, the control ends once, and when a negative determination is made, i.e., ACC is not being executed, the control proceeds to step S20.

In step S20, the CPU determines whether or not there is a deceleration target in front of the vehicle 102, i.e., whether or not a deceleration target is detected by the deceleration target detection device 15. When a negative determination is made, the control ends once, and when an affirmative determination is made, the control proceeds to step S30.

In step S30, the CPU determines whether or not the driver has performed a driving operation such as braking. When an affirmative determination is made, the control ends once, and when a negative determination is made, the control proceeds to step S40. Note that when an affirmative determination is made and the deceleration control described in step S50 below has already been executed, the deceleration control is terminated.

In step S40, the CPU calculates a target deceleration Gbt required to bring the vehicle speed V of the vehicle 102 to a target vehicle speed Vt determined by a type of the deceleration target when the vehicle reaches a position of the deceleration target. Note that the target deceleration Gbt may be a deceleration required to drive safely or stop the vehicle 102 when there is a deceleration target in front of the vehicle. Furthermore, when the deceleration target is a preceding vehicle, the position of the deceleration target is a position of the preceding vehicle when it was first detected.

The target vehicle speed Vt determined by the type of deceleration target is a speed Vf of a preceding vehicle when the deceleration target is the preceding vehicle. Furthermore, the target vehicle speed Vt is 0 when the deceleration target is a stationary target, i.e., a red signal, a stop sign, or a stop line, or an intersection without a signal.

For example, when the vehicle speed of the vehicle 102 when the deceleration target is detected is represented by Vp and a distance between the vehicle 102 and the deceleration target is represented by Dr, the target deceleration Gbt is calculated according to the following equation (1). Note that the distance Dr between the vehicle 102 and the deceleration target is estimated based on the detection results of the deceleration target detection device 15.

$$Gbt = (Vp - Vt)(Vp + Vt) / 2Dr \quad (1)$$

In step S50, the CPU outputs a command signal indicating the target deceleration Gbt to the deceleration control device 80. The deceleration control device 80 calculates a target braking force Fbt for the vehicle 102 based on the target deceleration Gbt, and controls the deceleration of the vehicle so that a braking force Fb of the vehicle becomes the target braking force Fbt, thereby controlling the deceleration of the vehicle so that the deceleration of the vehicle becomes the target deceleration.

In step S60, the CPU determines whether or not a termination condition for the deceleration support control has been satisfied, i.e., whether or not the deceleration control should be terminated. When a negative determination is made, the control ends once. When an affirmative determination is made, the deceleration control is terminated in step S70, and the control ends once. Note that the termination condition for the deceleration support control may be determined to have been satisfied when the deceleration support switch of the switch 18 is turned off, when the vehicle speed V of the vehicle 102 is determined to be equal to or less than the target vehicle speed Vt, or when a duration time of the deceleration control is determined to be equal to or longer than te (a positive constant).

<Driving control executed when alertness level of driver decreases (FIG. 3)>

Next, referring to the flowchart shown in FIG. 3, the driving control executed when the alertness level of the driver decreases in the first embodiment will be described. The driving control executed when the alertness level of the driver decreases according to the flowchart shown in FIG. 3 is repeatedly executed at predetermined intervals by the CPU of the driving support ECU 10 while the switch of the switch 18 for the driving control when the alertness level of the driver decreases is on. At the start of the driving control executed when the alertness level of the driver decreases, the threshold value Awb is initialized to a standard value Awbs (a positive constant).

First, in step S110, the CPU determines whether or not ACC or the deceleration support control is being executed. When an affirmative determination is made, the control ends once, and when a negative determination is made, i.e., ACC and the deceleration support control are not being executed, the control proceeds to step S120.

In step S120, the CPU determines whether or not it is necessary to reduce the vehicle speed V by determining whether or not the following six conditions A1 to A6 related to driving status of the driver are satisfied. When a negative determination is made, i.e., when none of the six conditions are satisfied, the control proceeds to step S140. When an affirmative determination is made, the control proceeds to step S130. Note that a usual vehicle-to-vehicle distance, etc., may be determined by learning usual driving status of the driver. Additionally, the items related to the driving status of the driver are not limited to the following six items.

A1: A vehicle-to-vehicle distance between the own vehicle and a preceding vehicle is smaller than the usual vehicle-to-vehicle distance.

A2: The usual vehicle-to-vehicle distance between the own vehicle and a preceding vehicle is smaller than a reference vehicle-to-vehicle distance (a positive constant that varies with the vehicle speed).

A3: A vehicle speed variation within a judgment time (a positive constant) is greater than a reference variation.

A4: Pedal operation is rougher than usual.

A5: The vehicle is being driven during a time zone when the driver does not usually drive.

A6: The vehicle is traveling on a road where it does not usually travel.

In step S130, the CPU determines that the necessity to reduce the vehicle speed is higher as the number of the items for which the conditions are satisfied is greater, and increases the threshold value Awb so that it becomes larger. Note that an amount by which the threshold value Awb is increased for each item may be the same regardless of the item, or may differ depending on the item.

In step S140, the CPU determines whether or not the alertness level Aw of the driver has been equal to or less than the threshold value Awb for Nb (a positive integer) consecutive times, i.e., whether or not the alertness level has been equal to or less than the threshold value for a reference duration time (a positive constant) or longer. When a negative determination is made, the control returns to step S110, and when an affirmative determination is made, the control proceeds to step S150.

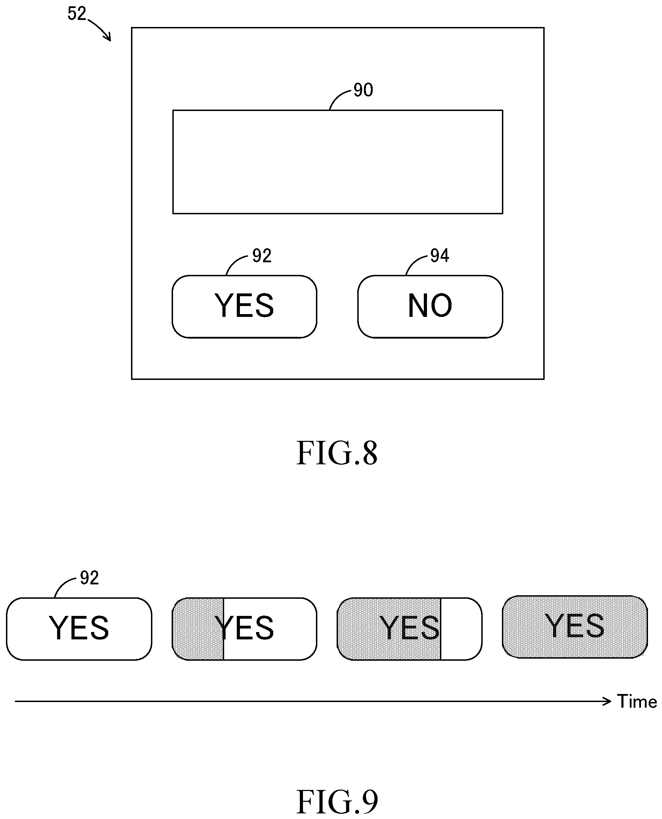

In step S150, the CPU outputs a command signal to the meter ECU 50, thereby displaying on the display device 52, as shown in FIG. 8, that execution of the deceleration support control is proposed, and emitting an audio signal through the speaker 54 indicating that the execution of the deceleration support control is proposed. The emission of the audio signal indicating that the deceleration support control is proposed may be omitted.

As shown in FIG. 8, the display device 52 may display, for example, a proposal 90 such as "Execute deceleration support control?" and soft switch icons 92 and 94 for 'Yes' and "No", respectively, for the driver to respond to the proposal by touch.

In step S160, the CPU determines whether or not the driver has objected to the proposal to execute the deceleration support control by touching the "No" icon 94. When a negative determination is made, the control proceeds to step S180, and when an affirmative determination is made, the control proceeds to step S170.

In step S170, the CPU reduces the threshold value Awb by a predetermined reduction amount ΔAwb (a positive constant). When step S170 is completed, the control returns to step S140. Note that when the threshold value Awb is reduced to below the standard value Awbs, the threshold value Awb is set to the standard value Awbs.

In step S180, the CPU determines whether or not the driver has agreed to the proposal to execute the deceleration support control by touching the "yes" icon 92. When an affirmative determination is made, the control proceeds to step S200, and when a negative determination is made, the control proceeds to step S190.

In step S190, the CPU determines whether or not a reference response time tr (a positive constant) has elapsed since the start of the proposal of the execution of the deceleration support control in step S150. When a negative determination is made, the control returns to step S160, and when an affirmative determination is made, the control proceeds to step S200.

Note that the display of the "yes" icon 92 may be gradually changed as time elapses since the start of the proposal. For example, as shown in FIG. 9, a portion of the icon 92 is highlighted, and the size of the highlighted portion increases as the elapsed time since the start of the proposal increases. When the elapsed time reaches the reference response time tr, the entire icon 92 may be highlighted. In this way, when the size of the highlighted portion of the icon 92 gradually increases, the driver can determine the elapsed time since the proposal was initiated based on the size of the highlighted portion. Alternatively, instead of gradually increasing the size of the highlighted portion, the color or brightness of the icon 92 may be gradually changed.

In step S200, the CPU switches the deceleration support switch of the switch 18 to the on position, thereby initiating the program corresponding to the deceleration support control shown in the flowchart in FIG. 2 to initiate the control. Note that the deceleration support control may be initiated even when the deceleration support switch of the switch 18 is not switched to the on position.

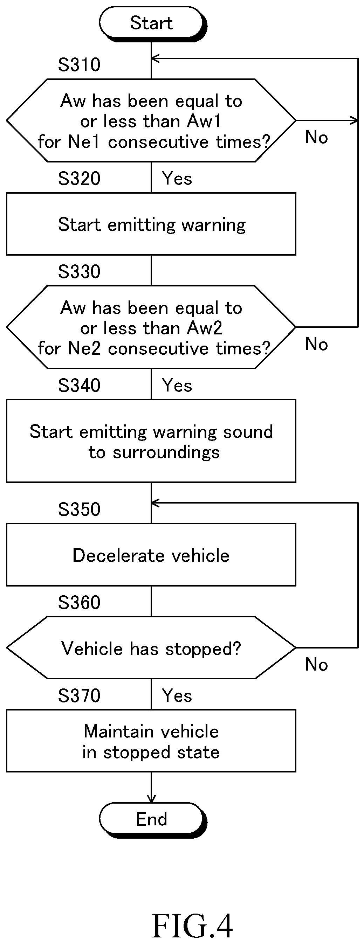

<Deceleration control executed when driver is in abnormal state (FIG. 4)>

Next, the deceleration control executed when the driver is in an abnormal state in the first embodiment will be described with reference to the flowchart shown in FIG. 4. The deceleration control executed when the driver is in an abnormal state according to the flowchart shown in FIG. 4 is repeatedly executed at predetermined intervals by the CPU of the driving support ECU 10 while the deceleration control switch for abnormal state of the driver of the switch 18 is on. The deceleration control described below executed when the driver is in an abnormal state is an example control and may be performed in any manner known in the art.

First, in step S310, the CPU determines whether or not the alertness level Aw of the driver has been determined to be equal to or less than a first threshold value Aw1 (a positive constant smaller than Awbs) for Ne1 (a positive integer) consecutive times. When a negative determination is made, the control ends once, and when an affirmative determination is made, the control proceeds to step S320.

In step S320, the CPU outputs a command signal to the meter ECU 50 to start displaying a warning such as "Please hold steering wheel" on the display device 52 and to start emitting a warning sound through the speaker 54 or buzzer (not shown).

In step S330, the CPU determines whether or not the alertness level Aw of the driver has been determined to be equal to or less than a second threshold value Aw2 (a positive constant smaller than Aw1) for Ne2 (a positive integer) consecutive times. When a negative determination is made, the control ends once, and when an affirmative determination is made, the control proceeds to step S340.

In step S340, the CPU outputs a command signal to the meter ECU 50 to start emitting a warning sound via the speaker 54 or buzzer (not shown) to the surroundings of the vehicle 102.

In step S350, the CPU outputs a command signal to the deceleration control device 80 to decelerate the vehicle 102 at a deceleration degree higher than the deceleration degree in the deceleration support control.

In step S360, the CPU determines whether or not the vehicle 102 has stopped. When a negative determination is made, the control returns to step S350, and when an affirmative determination is made, the control proceeds to step S370.

In step S370, the CPU outputs a command signal to the deceleration control device 80 to apply braking force to the wheels for a predetermined time set in advance to maintain the vehicle 102 in a stopped state.

In the deceleration control executed when the driver is in an abnormal state, in addition to decelerating the vehicle 102, the steered wheel 44 may be automatically steered by the automatic steering device so that the vehicle 102 moves to an area that is as safe as possible for itself and other vehicles.

[Second embodiment]

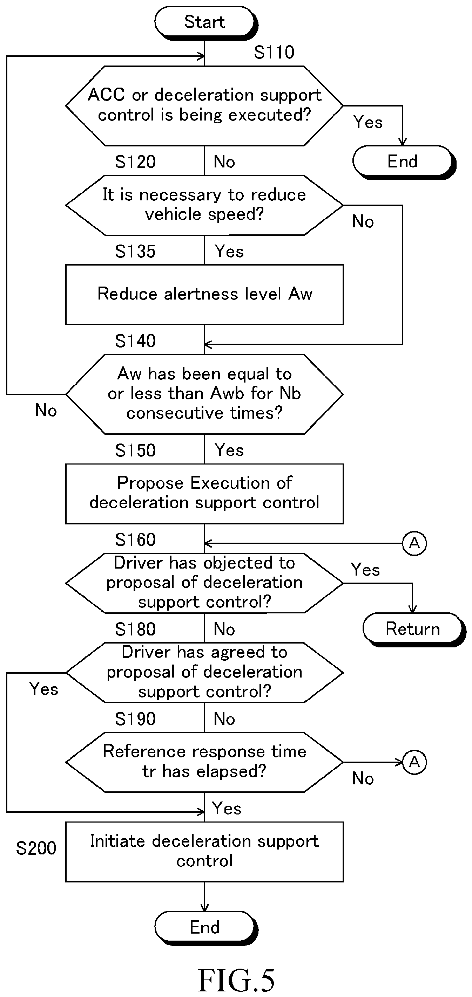

In the second embodiment, the ROM of the driving support ECU 10 stores a driving control program corresponding to the flowchart shown in FIG. 5 for when the alertness level of the driver decreases. The driving control method of the second embodiment is executed by executing the driving control when the alertness level of the driver decreases in accordance with the flowchart shown in FIG. 5. Note that the deceleration support control program and the deceleration control program executed when the driver is in an abnormal state in the second embodiment are the same as the deceleration support control program (FIG. 2) and the deceleration control program executed when the driver is in an abnormal state (FIG. 4) in the first embodiment.

<Driving control executed when alertness level of driver decreases (FIG. 5)>

As can be seen from a comparison of FIG. 5 and FIG. 3, step S135 is executed instead of step S130, and when an affirmative determination is made in step S160, step S170 is not executed, and the control ends once. Except for these points, steps S110 to S200 are executed in the same manner as in the first embodiment.

In step S135, the CPU determines that the necessity to reduce the vehicle speed increases as the number of items among the items A1 to A6 that are determined to satisfy the conditions increases, and reduces the alertness level Aw to be determined to a lower value. Note that the reduction amount of the alertness level Aw for each item may be the same regardless of the item, or may differ depending on the item.

<Effects of the first and second embodiments>

According to the first and second embodiments described above, when it is determined that it is necessary to decelerate the vehicle based on the driving conditions of the vehicle 102 in the situation where the deceleration support control switch 18 is on (S20), the deceleration support control that automatically decelerates the vehicle is executed (S50). Furthermore, when it is determined that the alertness level Aw of the driver is equal to or less than the threshold value Awb (S140) in the situation where the deceleration support control switch is off (S110), the deceleration support control is executed (S200). Thus, even when the deceleration support control switch is off, when it is determined that the alertness level of the driver is equal to or less than the threshold value, the deceleration support control can be executed without requiring the driver to operate the deceleration support control switch.

Furthermore, according to the first and second embodiments, the necessity to reduce the vehicle speed V based on the driving status of the driver is determined for the items A1 to A6 (S120), and at least one of the threshold value and the alertness level is changed in accordance with the necessity such that the higher the necessity, the more likely it is determined that the alertness level Aw is equal to or less than the threshold value Awb (S130, S135). Therefore, the higher the necessity to reduce the vehicle speed, the more likely it is determined that the alertness level is equal to or less than the threshold value, enabling the deceleration support control to be initiated earlier compared to when none of the threshold value and the alertness level are not changed.

In particular, according to the first embodiment, the threshold value Awb is increased in accordance with as the necessity to reduce the vehicle speed V so that the threshold value increases as the necessity increases (S130), thereby making it easier to determine that the alertness level is equal to or less than the threshold value as the above necessity increases.

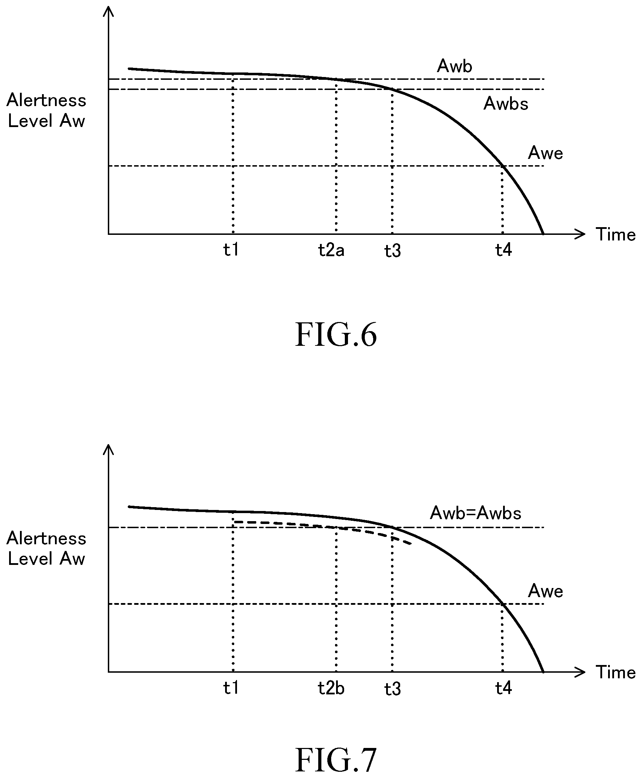

For example, FIG. 6 shows the operation of the first embodiment in a situation where the alertness level Aw of the driver gradually decreases while the vehicle 102 is traveling. As shown in FIG. 6, it is represented that at time t3, the alertness level Aw falls below the standard threshold value Awbs, and at time t4, the alertness level Aw falls below a threshold value Awe.

When it is determined that there is no necessity to reduce the vehicle speed (S120), the threshold value Awb is not increased and is maintained at the standard threshold value Awbs. Therefore, immediately after time t3, the deceleration support control is proposed (S150), and when the driver does not object to the proposal, the deceleration support control is initiated (S200).

In contrast, for example, at time t1, when it is determined that there is a necessity to reduce the vehicle speed V (S120), the threshold value Awb is increased and becomes greater than the standard threshold value Awbs. Therefore, at time t2a, for example, which is earlier than time t3, it is determined that the alertness level Aw is equal to or less than the threshold value Awb, and the deceleration support control is proposed (S150). When the driver does not object to the proposal, the deceleration support control is initiated (S200). Thus, by increasing the threshold value Awb, it becomes easier to determine that the alertness level Aw is equal to or less than the threshold value Awb, and the deceleration support control is initiated earlier.

Furthermore, according to the second embodiment, the alertness level Aw to be determined is reduced in accordance with the necessity to reduce the vehicle speed V so that the alertness level Aw becomes smaller as the necessity increases (S135), thereby making it easier to determine that the alertness level is equal to or less than the threshold value as the above necessity increases.

For example, FIG. 7 shows the operation of the second embodiment in a situation where the alertness level Aw of the driver gradually decreases while the vehicle 102 is traveling. As in FIG. 6, it is represented that at time t3, the alertness level Aw falls below the standard threshold value Awbs, and at time t4, the alertness level Aw falls below the threshold value Awe.

When it is determined that there is no necessity to reduce the vehicle speed (S120), the alertness level Aw is not reduced. Therefore, immediately after time t3, the deceleration support control is proposed (S150), and when the driver does not object to the proposal, the deceleration support control is initiated (S200).

In contrast, for example, at time t1, when it is determined that there is the necessity to reduce vehicle speed (S120), as shown by the dashed line in FIG. 7, the alertness level Aw to be determined is reduced. Therefore, at time t2b, for example, which is earlier than time t3, when it is determined that the alertness level Aw is equal to or less than the standard threshold value Awb, the deceleration support control is proposed (S150), and when the driver does not oppose the proposal, the deceleration support control is initiated (S200). Thus, by reducing the alertness level Aw, it becomes easier to determine that the alertness level Aw is equal to or less than the threshold value Awb, and the deceleration support control is initiated earlier. Note that the alertness level Aw in the deceleration control executed when the driver is in an abnormal state (FIG. 4) is not reduced.

Furthermore, according to the first and second embodiments, it is determined whether or not there is a necessity to reduce the vehicle speed V to safely drive the vehicle based on the plurality of the items A1 to A6 related to the driving status of the driver (S120). Additionally, the more items that determine the necessity to reduce the vehicle speed, the higher the necessity is determined to be (S130, S135). Therefore, based on the number of the items that determine the necessity to reduce the vehicle speed, it is possible to determine whether or not the necessity is high or not.

Furthermore, according to the first and second embodiments, when it is determined that the alertness level Aw has been equal to or less than the threshold value Awb (S140), the deceleration support control is proposed to the driver (S150), and when the driver agrees to the proposal (S180), the deceleration support control is executed (S200). Thus, it is possible to prevent the deceleration support control from being executed without proposing it to the driver, and to prevent the deceleration support control from being executed against will of the driver.

Furthermore, according to the first and second embodiments, when the driver does not respond to the proposal within the reference response time tr (S190), the deceleration support control is executed (S200). Thus, even if the driver does not respond to the proposal, the deceleration support control can be executed after the reference response time has elapsed.

In particular, according to the first embodiment, when the driver objects to the proposal (S160), the increased threshold value Awb is reduced (S170). Thus, when the driver objects to the proposal, the threshold value is reduced, making it difficult to determine that the alertness level is equal to or less than the threshold value.

Furthermore, according to the first and second embodiments, when the alertness level Aw is equal to or less than the threshold value Awb for a period equal to or longer than the reference duration time, the alertness level is determined to be equal to or less than the threshold value (S140). Thus, compared to where the alertness level is determined to be equal to or less than the threshold value without considering the duration time of the alertness level being equal to or less than the threshold value, the risk of incorrectly determining that the alertness level is equal to or less than the threshold value can be reduced.

Although the present invention has been described in detail with reference to specific embodiments, it will be apparent to those skilled in the art that the present invention is not limited to the above-described embodiments, and various other embodiments are possible within the scope of the present invention.

For example, in the first embodiment described above, the threshold value Awb is increased so that the threshold value increases as the necessity to reduce vehicle speed V increases (S130). **In** the second embodiment, the alertness level Aw to be determined is reduced so that the alertness level decreases as the necessity to reduce the vehicle speed V increases (S135). However, the threshold value may be increased in accordance with the necessity such that the threshold value becomes larger as the necessity to reduce the vehicle speed increases, and the alertness level to be determined may be decreased in accordance with the necessity to reduce the vehicle speed such that the alertness level becomes smaller as the necessity increases.

In the first and second embodiments described above, ACC and the deceleration control executed when the driver is in an abnormal state are performed. However, the vehicle driving control device of the present invention may be applied to vehicles in which ACC or the deceleration control executed when the driver is in an abnormal state is not performed.

Furthermore, in the first and second embodiments described above, when it is determined that it is necessary to decelerate the vehicle based on the driving conditions of the vehicle in the situation where the deceleration support control switch 18 is on (S120), the deceleration support control (FIG. 3) is executed. Furthermore, when it is determined that the alertness level Aw of the driver is equal to or less than the threshold value Awb (S140) in the situation where the deceleration support control switch is off, the deceleration support control is executed (S200). However, the deceleration support control executed when it is determined that the alertness level Aw of the driver is equal to or less than the threshold value Awb in the situation where the deceleration support control switch is off may differ from the deceleration support control corresponding the program shown in the flowchart in FIG. 3.

## Claims

1. A vehicle driving control device (100) comprising: a deceleration control device (80) that controls deceleration of a vehicle (102); and an electronic control unit (10) configured to execute deceleration support control that automatically decelerates the vehicle by the deceleration control device when it is determined that it is necessary to decelerate the vehicle (102) based on driving conditions of the vehicle in a situation where a deceleration support control switch (18) is on; **characterized in that**

   the electronic control unit (18) is configured to execute the deceleration support control when it is determined that alertness level (Aw) of a driver is equal to or less than a threshold value (Awb) in a situation where the deceleration support control switch (18) is off.

2. The vehicle driving control device (100) according to claim 1, wherein the electronic control unit (10) is configured to determine necessity to reduce a vehicle speed (V) based on driving status of the driver, and change at least one of the threshold value (Awb) and the alertness level (Aw) in accordance with the necessity such that the higher the necessity, the more likely it is determined that the alertness level (Aw) is equal to or less than the threshold value (Awb).

3. The vehicle driving control device (100) according to claim 2, wherein the electronic control unit (10) is configured to increase the threshold value (Awb) in accordance with the necessity such that the threshold value becomes larger as the necessity increases.

4. The vehicle driving control device (100) according to claim 2, wherein the electronic control unit (10) is configured to reduce the alertness level (Aw) in accordance with the necessity such that the alertness level decreases as the necessity increases.

5. The vehicle driving control device (100) according to claim 2, wherein the electronic control unit (10) is configured to determine whether or not it is necessary to reduce the vehicle speed (V) in order to safely drive the vehicle (1020) with respect to a plurality of items (A1-A6) related to driving status of the driver, and determine that the necessity is higher as the number of the items indicating the necessity to reduce the vehicle speed is greater.

6. The vehicle driving control device (100) according to claim 1, wherein the electronic control unit (10) is configured to propose execution of the deceleration support control to the driver when it is determined that the alertness level (Aw) is equal to or less than the threshold value (Awb), and execute the deceleration support control when the driver agrees to the proposal.

7. The vehicle driving control device (100) according to claim 6, wherein the electronic control unit (10) is configured to execute the deceleration support control when the driver does not respond to the proposal within a reference response time (tr).

8. The vehicle driving control device (100) according to claim 6, wherein the electronic control unit (10) is configured to reduce the threshold value (Awb) when the driver objects to the proposal.

9. The vehicle driving control device (100) according to claim 1, the electronic control unit (10) is configured to determine that the alertness level (Aw) is equal to or less than the threshold value (Awb) when a condition where the alertness level is equal to or less than the threshold value continues for a reference duration time or longer.

10. A vehicle driving control method that comprises executing deceleration support control to automatically decelerate a vehicle (102) when it is determined that it is necessary to decelerate the vehicle based on driving conditions of the vehicle in a situation where a deceleration support control switch (18) is on, wherein
the vehicle driving control method further comprises executing the deceleration support control when it is determined that alertness level (Aw) of a driver is equal to or less than a threshold value (Awb) in a situation where the deceleration support control switch (18) is off.

11. The vehicle driving control method according to claim 10, further comprising: determining necessity to reduce a vehicle speed (V) based on driving status of the driver, and changing at least one of the threshold value (Awb) and the alertness level (Aw) in accordance with the necessity such that the higher the necessity, the more likely it is determined that the alertness level is equal to or less than the threshold value.

FIG.1

Start

S10

ACC is being executed? — Yes

No

S20

There is deceleration target? — No

Yes

S30

Driver has performed driving operation? — Yes

No

S40

Calculate target deceleration Gbt

S50

Control deceleration of vehicle

S60

Termination condition has been satisfied? — No

Yes

S70

Terminate deceleration control

Return

FIG.2

Start

S110

ACC or deceleration support control is being executed? — Yes → End

S120 | No

It is necessary to reduce vehicle speed? — No

S130 | Yes

Increase threshold value Awb

S140

Aw has been equal to or less than Awb for Nb consecutive times? — No

S150 | Yes

Propose execution of deceleration support control

S160

Driver has objected to proposal of deceleration support control? — Yes (A)

S180 | No

S170

Reduce threshold value Awb

Driver has agreed to proposal of deceleration support control? — Yes

S190 | No

Reference response time tr has elapsed? — No (A)

S200 | Yes

Initiate deceleration support control

End

FIG.3

```
                    ┌──────────┐
                    │   Start  │
                    └────┬─────┘
                         │ ◄──────────────────────┐
   S310                  ▼                         │
        ╱───────────────────────────────╲         │
       ╱      Aw has been equal to        ╲  No    │
      ╱         or less than Aw1           ╲───────┤
      ╲     for Ne1 consecutive times?     ╱       │
       ╲───────────────────────────────╱          │
   S320           │ Yes                            │
        ┌─────────────────────────────┐           │
        │     Start emitting warning   │           │
        └──────────────┬──────────────┘           │
   S330                ▼                           │
        ╱───────────────────────────────╲         │
       ╱      Aw has been equal to        ╲  No    │
      ╱         or less than Aw2           ╲───────┘
      ╲     for Ne2 consecutive times?     ╱
       ╲───────────────────────────────╱
   S340           │ Yes
        ┌─────────────────────────────┐
        │  Start emitting warning sound│
        │        to surroundings       │
        └──────────────┬──────────────┘
   S350                ▼ ◄──────────────────────┐
        ┌─────────────────────────────┐         │
        │      Decelerate vehicle      │         │
        └──────────────┬──────────────┘         │
   S360                ▼                         │
        ╱───────────────────────────────╲  No   │
       ╱        Vehicle has stopped?      ╲──────┘
       ╲───────────────────────────────╱
   S370           │ Yes
        ┌─────────────────────────────┐
        │       Maintain vehicle       │
        │      in stopped state        │
        └──────────────┬──────────────┘
                       ▼
                 ┌──────────┐
                 │   End    │
                 └──────────┘
```

# FIG.4

Start

S110

ACC or deceleration support
control is being executed?          Yes

S120    No                                    End

It is necessary to reduce
vehicle speed?                        No

S135    Yes

Reduce alertness level Aw

S140

Aw has been equal to
or less than Awb for Nb          No
consecutive times?

S150    Yes

Propose Execution of
deceleration support control

S160                                    (A)

Driver has objected to            Yes
proposal of deceleration
support control?

S180    No                                    Return

Driver has agreed to
proposal of deceleration
support control?
Yes

S190    No

Reference response time           (A)
tr has elapsed?                   No

Yes

S200    Initiate deceleration support
        control

End

FIG.5

FIG.6

FIG.7

52

90

92 YES

94 NO

FIG.8

92 YES

YES

YES

YES

Time

FIG.9

Europäisches Patentamt

European Patent Office

Office européen des brevets

# EUROPEAN SEARCH REPORT

**Application Number**

EP 25 19 9591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2022 113148 A1 (BAYERISCHE MOTOREN WERKE AG [DE]) 30 November 2023 (2023-11-30) * figures 1-4 * | 1-7,9-11 | INV. B60K28/06 B60W30/18 B60W50/08 |
| A | * paragraphs [0002] - [0003], [0006] - [0007], [0010], [0019], [0019] - [0024], [0031] - [0032], [0044], [0046], [0048], [0053] - [0054] * * the whole document * | 8 | |
| X | DE 10 2015 122603 A1 (DENSO INT AMERICA INC [US]) 28 July 2016 (2016-07-28) * figures 1-5,8-9 * * paragraphs [0003] - [0005], [0007], [0025], [0027] - [0033], [0036] - [0037], [0042] - [0043], [0045] - [0046], [0048], [0050] * * the whole document * | 1,5,10 | |
| X | US 2009/219161 A1 (KOCHER PASCAL [FR]) 3 September 2009 (2009-09-03) * figures 1-2 * * paragraphs [0002], [0005], [0014], [0016], [0019], [0022] * * the whole document * | 1,5,10 | TECHNICAL FIELDS SEARCHED (IPC) B60K B60W |
| A | US 2020/286358 A1 (DOI ATSUHIRO [JP] ET AL) 10 September 2020 (2020-09-10) * figures 1-4 * * the whole document * | 2,3 | |
| A | DE 10 2018 216511 A1 (VOLKSWAGEN AG [DE]) 26 March 2020 (2020-03-26) * figures 1-4 * * the whole document * | 2,4 | |

-/--

The present search report has been drawn up for all claims

| Place of search | Date of completion of the search | Examiner |
|---|---|---|
| Munich | 19 January 2026 | Dubreuil, Cédric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 19 9591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/271604 A1 (ST GRAY ERIK [US] ET AL) 31 August 2023 (2023-08-31)<br>* figures 1-10 *<br>* the whole document *<br>----- | 7,9 | |

TECHNICAL FIELDS
SEARCHED      (IPC)

The present search report has been drawn up for all claims

| Place of search | Date of completion of the search | Examiner |
|---|---|---|
| Munich | 19 January 2026 | Dubreuil, Cédric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 9591

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2026

| Patent document cited in search report | Publication date | Patent family member(s) | | Publication date |
|---|---|---|---|---|
| DE 102022113148 A1 | 30-11-2023 | CN | 119137027 A | 13-12-2024 |
| | | DE | 102022113148 A1 | 30-11-2023 |
| | | US | 2025326405 A1 | 23-10-2025 |
| | | WO | 2023227383 A1 | 30-11-2023 |
| DE 102015122603 A1 | 28-07-2016 | CN | 105818812 A | 03-08-2016 |
| | | DE | 102015122603 A1 | 28-07-2016 |
| | | JP | 6123873 B2 | 10-05-2017 |
| | | JP | 2016135665 A | 28-07-2016 |
| | | US | 9308914 B1 | 12-04-2016 |
| US 2009219161 A1 | 03-09-2009 | DE | 10350276 A1 | 02-06-2005 |
| | | EP | 1689606 A1 | 16-08-2006 |
| | | JP | 2007515327 A | 14-06-2007 |
| | | US | 2009219161 A1 | 03-09-2009 |
| | | WO | 2005044612 A1 | 19-05-2005 |
| US 2020286358 A1 | 10-09-2020 | CN | 111492420 A | 04-08-2020 |
| | | DE | 112018005980 T5 | 30-07-2020 |
| | | JP | 6965727 B2 | 10-11-2021 |
| | | JP | 2019113925 A | 11-07-2019 |
| | | US | 2020286358 A1 | 10-09-2020 |
| | | WO | 2019123803 A1 | 27-06-2019 |
| DE 102018216511 A1 | 26-03-2020 | DE | 102018216511 A1 | 26-03-2020 |
| | | EP | 3856601 A1 | 04-08-2021 |
| | | WO | 2020064160 A1 | 02-04-2020 |
| US 2023271604 A1 | 31-08-2023 | NONE | | |

EPO FORM P0459

For more details about this annex : see Official Journal of the European Patent Office, No. 12/82

**EP 4 717 493 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017190047 A